Europäisches Patentamt

(19) European Patent Office

Office européen des brevets

(11) Publication number: **0 235 650 B1**

(12) **EUROPEAN PATENT SPECIFICATION**

(45) Date of publication of patent specification:
28.08.91 Bulletin 91/35

(51) Int. Cl.⁵: **A01F 15/14, A01F 15/08**

(21) Application number: 87102104.4

(22) Date of filing: 14.02.87

(54) Machine for forming cylindrical bales of crop.

(30) Priority: 05.03.86 GB 8605466
02.02.87 GB 8702291

(43) Date of publication of application:
09.09.87 Bulletin 87/37

(45) Publication of the grant of the patent:
28.08.91 Bulletin 91/35

(84) Designated Contracting States:
DE ES FR GB IT NL

(56) References cited:
EP-A- 0 075 252
EP-A- 0 129 021
EP-A- 0 130 258
DE-A- 3 330 757
DE-A- 3 418 681

(73) Proprietor: DEERE & COMPANY
1 John Deere Road
Moline, Illinois 61265 (US)

(72) Inventor: Frerich, Josef
Flurstrasse 6
W-6661 Dietrichingen (DE)
Inventor: Viaud, Jean
16, Rue de l'Ecole
F-57200 Sarreguemines (FR)

(74) Representative: Feldmann, Bernhard et al
DEERE & COMPANY European Office Patent
Department Steubenstrasse 36-42 Postfach
100862
W-6800 Mannheim 1 (DE)

## Description

This invention relates to a baling machine for forming cylindrical bales of crop having a baling chamber, which is defined by conveying means, feed rolls for advancing wrapping material for the completed bale, and a cutting mechanism for the wrapping material downstream of the feed rolls.

Machines, towed by a tractor, for forming large cylindrical bales of hay (so called "round balers") are well known. As the machine advances, the crop is removed from a windrow by a pick-up mechanism and delivered rearwardly to a baling chamber where it is rolled into a bale.

In one basic widely known form of such machines, the baling chamber is defined by runs of driven belts which move outwardly to enlarge the chamber to accommodate the bale as it grows in size. The hay is caused to roll round upon itself into a core and the core rotates about its horizontal axis and finally a completed bale is formed, the chamber being fed throughout with hay. The fully formed bale is tied with twine to maintain its shape and is discharged through a gate formed by a rear portion of the machine.

A machine, as described in the opening paragraph above, is disclosed in EP-A-0129021. This has a baling chamber of fixed size defined by chain and slat conveyors, and is provided with a cutting mechanism for wrapping material for the bale. The mechanism is operated simply by pulling on a line.

In our EP-A-0238706, claiming the same priority date as the present application, we have described and claimed a machine which enables bales produced in such a chamber to be wrapped with net to maintain their shape.

With a variable volume baling chamber, bales of different sizes can be produced. Net can therefore be wasted if a similar amount is used for all bales.

The present invention enables such wastage to be reduced or avoided.

According to the present invention the conveyor means are belts, the baling chamber is of variable volume, and the machine has a belt take-up and tensioning mechanism including a pair of idler arms and a roll mounted therebetween over which the belts are trained, the arms being swingable to let out an increasing belt length for the chamber as the bale grows in size, the cutting mechanism being arranged automatically to be triggered in dependence on the position of the idler arms corresponding to the size of a completed bale.

In this way, the use of a single standard length of wrapping material, which is large enough to wrap large bales but too long economically to be used for small bales, is avoided in a machine with a variable volume baling chamber defined by belts, but rather each cut length of wrapping material is adapted to the particular bale on which it is to be employed.

An embodiment of the invention will now be described with reference to the accompanying diagrammatic drawings in which :

Fig. 1 is a perspective view of the left hand side and rear of a machine of the present invention for forming large cylindrical bales of hay (with some items omitted) including apparatus for wrapping a completed bale with net, shown during wrapping ;

Fig. 2 is a view of the machine from the left showing details within the machine, shown during baling ;

Fig. 3 is an enlarged view of the wrapping apparatus of Fig. 1, shown during wrapping as in Fig. 1 ; and

Fig. 4 is a view along line IV - IV of Fig. 2 showing a detail of that Figure.

In the drawings, the baler includes a main frame 10 mounted on a pair of wheels 12. The main frame has an upright fore-and-aft extending wall 14 on either side connected by transverse beams (not shown). A draft tongue 16 is connected to a transverse beam at the front of the frame 10 and extends forwardly for attaching the baler to a tractor (also not shown) which draws the machine.

A plurality of lateral rolls extends over the width of the machine. One set of rolls 18, 20, 22, 24, 26 is journalled in the side walls 14, whilst another set consisting of rolls 28, 30, 32 is journalled in a swingable gate 34. There is also a pair of chamber restricting rolls 36, 38 and two belt take-up rolls 40, 41.

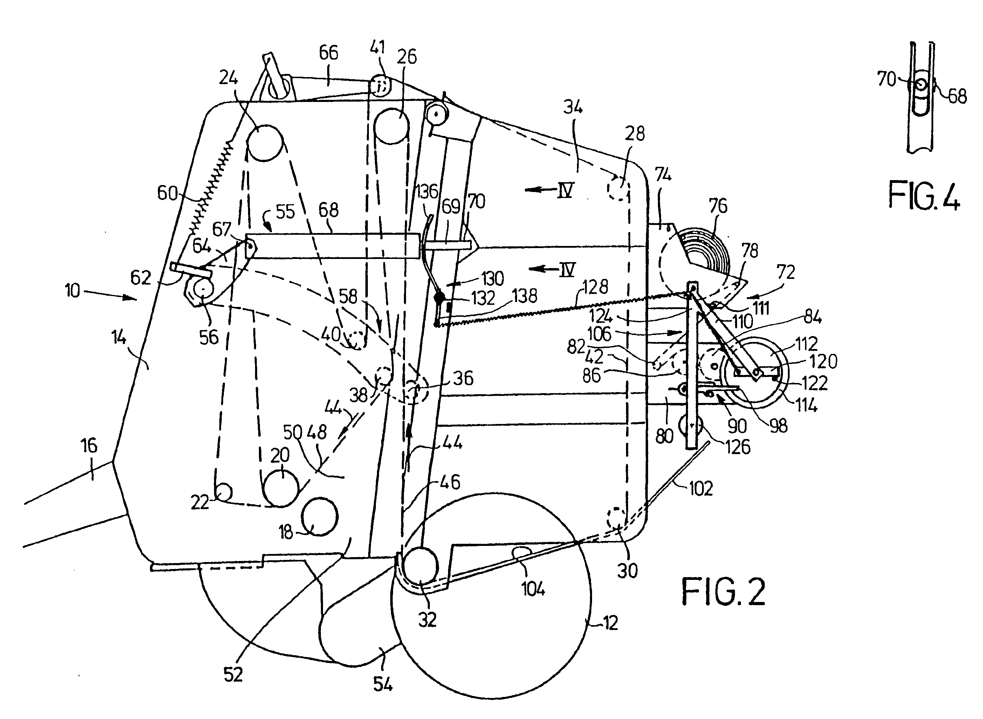

Six rubber belts 42 are trained side-by-side over the rolls, with the exception of the roll 18 which acts as a stripper roll, to provide the configuration shown and they move in the direction indicated by arrows 44, the stripper roll 18 being driven clockwise as viewed in Fig. 2. However, alternate belts only are trained over the lower foremost roll 22, whilst the remaining belts by-pass this roll, to provide a staggered array which is of no significance in relation to the present invention but which is described in our EP-B-0070537. Upwardly extending runs 46, 48 of the belts 42 define a bale-forming chamber 50 the ends of which are provided by the side walls 14 and gate 34 and which has an inlet 52 for crop received from a pick-up 54 beneath it.

In order to accommodate the increasing diameter of a growing bale core in the bale-forming chamber 50, the size of the chamber must also increase and a belt take-up and tensioning mechanism 55 is provided at either side of the machine. These mechanisms include : a pair of rearwardly extending idler arms which are mounted rigidly at the forward end of the main frame 10 on a horizontal transverse shaft 56, providing a pivot connection for the arms, and of which the left hand arm 58 only is shown ; the belt take-up roll 40 which is supported at either end at an intermediate location on the arms 58 ; and the pair of chamber restricting rolls 36, 38 supported at the free ends of the arms. The arms are biased in a clockwise direction (in Fig. 2) by a pair of springs, one on either side of the main frame 10, of which only the left hand spring 60 is shown and only its arrangement will be described, the other being similar. The spring 60 is connected at its lower end by a post 62 to a lever portion 64 of the arm 58, the portion 64 being rigid with the pivot shaft 56, and at its upper end to one arm of a bell crank 66 the other arm of which bears one end of the take-up roll 41. The free end of the lever portion 64 is pivotally connected at a point 67 to the cylinder of a piston and cylinder unit 68, loading the arm 58, of which the piston rod 69 is in turn pivotally connected to the gate 34 at a point 70, a similar arrangement being provided also on the right hand side of the machine (although it is possible to use a single unit 68 only). Thus the piston and cylinder unit 68 also forms part of the belt take-up and tensioning mechanism 55.

As described thus far the baler is conventional.

On the back of the gate 34 and below it, there is mounted apparatus 72 for wrapping a completed bale with net which serves to maintain the form of the cylindrical bale. This apparatus 72 includes a trough-shaped holder 74 extending across the width of the gate 34 and containing a roll of net 76. An idler roll 78 is disposed along the outlet of the holder 74 and the net trained over it. A pair of brackets 80 is arranged below the holder 74 and the brackets carry between them a further idler roll 82 and a pair of side-by-side feed rolls 84, 86 of which the roll 86 is driven by an electric or hydraulic motor (not shown). The roll 84 is supported by a shaft 89 rigid therewith which projects outwardly beyond the associated bracket 80. The net 76 passes over the idler roll 82 and through the nip of the feed rolls 84, 86 by which it is gripped.

A cutting mechanism 90 is mounted on the brackets 80 below the feed rolls 84, 86 to receive the net 76 therefrom and includes a hammer 92 on the gate side of the net and a horizontal knife 93 on the other side of the net. The hammer 92 is pivotally mounted on the brackets 80 by upwardly extending posts 94 and loaded by a spring 95 toward the knife 93. Its ends are received in a slot 96 in each bracket 80 and are pivotally connected to a horizontal release lever 98 on the outward face of each bracket, the release lever having a shoulder on its underside in contact with an abutment pin 100.

Below the brackets 80 there is a guide plate 102 which slopes forwardly and downwardly, and extends in close proximity to the underside of the belts which are in a run 104 between the rolls 30 and 32, finally terminating in an upturned end portion which follows the path of the belts to the inlet 52 of the baling chamber 50. The guide plate 102 is positioned to receive net which has passed through the cutting mechanism 90 and to press the net against the belt run 104 to advance it.

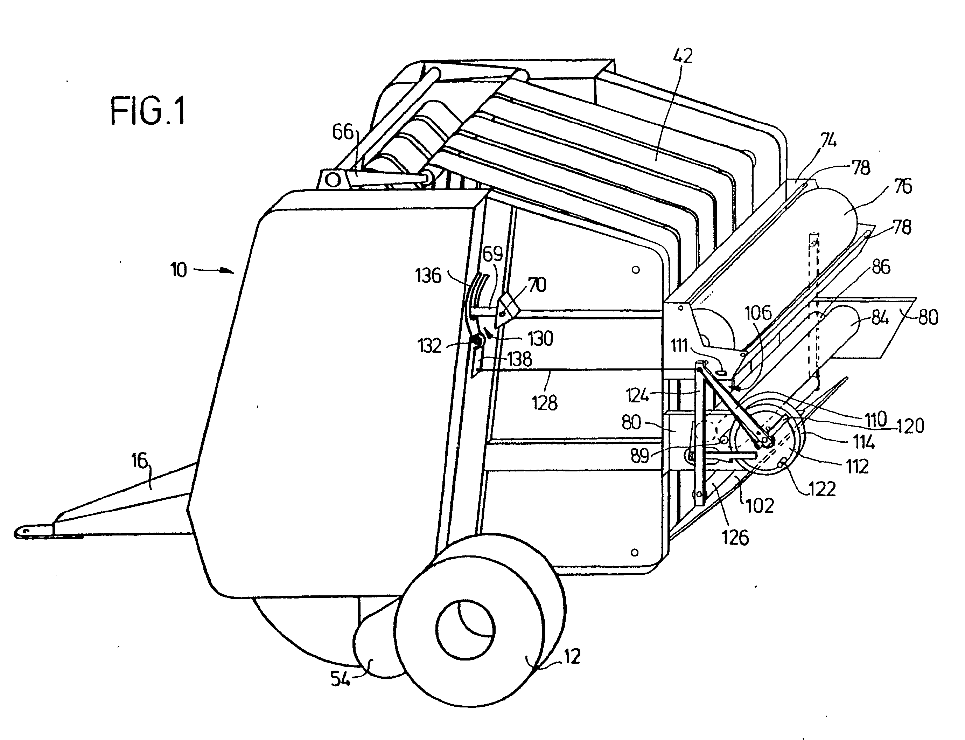

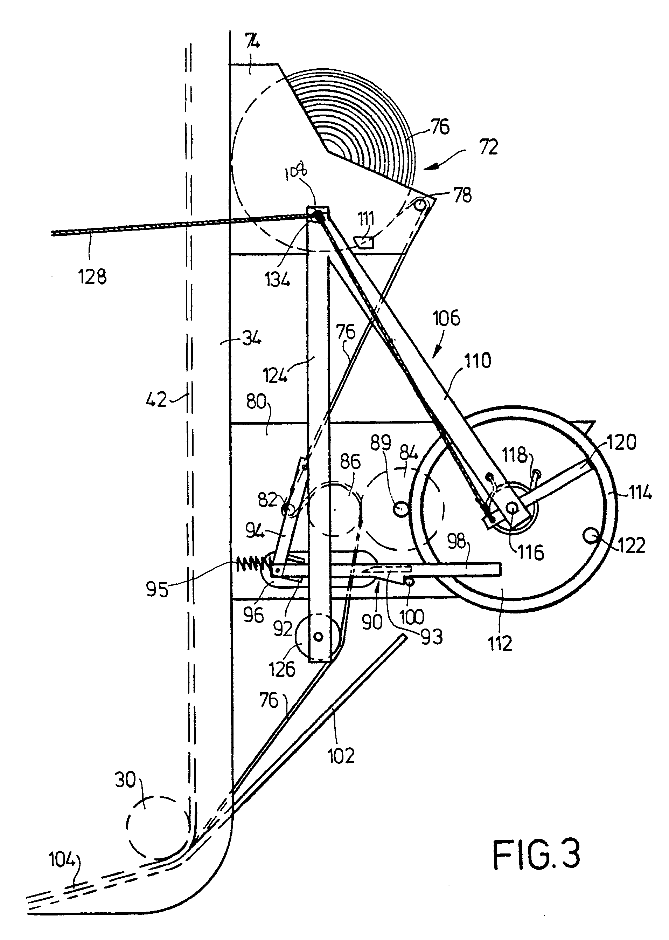

A mechanism for freeing the release lever 98 will now be described. On the left side of the machine a bell-crank lever 106 is swingably suspended from a pivot pin 108 projecting from an outer face of the holder 74 and is lightly spring loaded in an anti-clockwise direction toward an abutment 111 on the holder. One arm 110 of the bell crank extends rearwardly carrying at its lower end a wheel 112 which is provided with a rubber facing 114 and which can turn on a shaft 116. Movement of the wheel 112 in the clockwise direction (as viewed in the Figures) is opposed by a spring loading 118. The shaft 116 also carries an abutment arm 120 which, on one side of the shaft, extends radially of the wheel 112 almost to its periphery and, on the other, just a short distance. The arm 120 is loaded by a spring (not shown) against turning in a clockwise direction. A travelling member in the form of a release peg 122 or other abutment projects from the outward side of the roller 112 and is located against the underside of the abutment arm 120 in a "home" position during baling (Fig. 2) and can move from this position to contact the underside of the release lever 98 on clockwise movement of the wheel 112 during wrapping (Figs. 1 and 3). The remaining arm 124 of the bell-crank lever 106 carries at its lower end an idler roll 126 which extends across the machine and over which the net 76 is trained on being fed to the bale-forming chamber 50.

A draw line in the form of a cable 128 is connected between the shorter portion of the abutment arm 120 and a sensor 130 mounted for swinging movement about a pivot pin 132 on the gate 34. En route the cable passes over a pulley 134 on the pivot pin 108. The sensor 130 has an upper portion 136 which is forked to receive the piston rod 69, as can be seen in Fig. 4, the fork permitting free movement of the rod both along and through the fork, and a lower portion 138 rigid therewith to the lower end of which the cable 128 is attached. Due to the spring loading of the abutment arm 120, the sensor 130 will be held by the pull of the cable 128 in continuous contact with the rearward end of the cylinder of the piston and cylinder unit 68 on the left side of the machine, and therefore "senses" its movement and hence the extent of expansion of the unit which in turn is dependent on the position of the idler arm 58 and thus on bale size. Sensing the position of the idler arm 58 indirectly by way of the piston and cylinder unit 68 avoids direct attachment of the cable to the arm and the consequent routing of the cable too near the pivot of the gate 34 when the latter is open.

Although the mechanism for freeing the release lever 98 has been described above as having a single bell-crank lever 106 connected to a sensor 130 on one side only of the machine, it is possible to use in addition a further bell-crank lever in conjunction with a further sensor on the other side.

In operation, hay lying in a windrow is lifted and conveyed to the baling chamber 50 where the oppositely moving runs 46, 48 of the belts 42 cause the crop to turn clockwise (as viewed in Fig. 2) so as to form a bale core of increasing size which eventually overcomes the tension in the belts brought about by the belt take-up and tensioning mechanisms, and the idler arms 58 consequently swing upwardly, the piston and cylinder units 68 expanding, and thus the chamber 50 increases in size until a full-sized bale has been formed. The operation of baling so far described is conventional.

The bale is then wrapped with net using the apparatus 72. With crop still being fed to the baling chamber 50 and the bale still rotating, the motor for the feed roll 86 is triggered, by means of a switch (not shown) which is sensitive to a predetermined position of the idler arms 58 corresponding to the required full-size bale, to drive the feed roll 86 and hence to advance the net 76 of which the end is, at this stage, level with the knife 93. The net is propelled to the guide plate 102, slides along the plate and reaches the bite between the roll 30 and belts 42 on the one hand and the plate 102 on the other where it is gripped and further advanced by the belt run 104, tracking at the same time over the roll 126. Finally the net 76 reaches the upturned end portion of the plate 102 and thus enters the baling chamber 50 where it is carried round with the bale.

When three quarters of the circumference of the bale has been wrapped by the net the flow of hay to the baling chamber is stopped. This can be brought about, for example, by an electrically operated dog clutch (not shown) triggered automatically by a counter meter and connected in a drive line to the pick-up 54, only the pick-up being stopped.

By the completion of wrapping it is desirable to have two full turns of net on the bale so that there is entire overlap of the net, but at the same time to avoid wastage due to having excess net. Wrapping is continued after shut-off of the pick-up 54 until such time as the length of net downstream of the cutting mechanism 90 measures twice the circumference of the bale. This is metered as follows.

During the period that the bale is being formed, as it grows in size and the idler arms 58 swing upwardly, the sensor 130 will turn in an anti-clockwise direction allowing the abutment arm 120 via the cable 128 also to swing in an anti-clockwise manner under the influence of its spring loading. This movement is in turn followed by that of the release peg 122 which maintains contact with the swinging abutment arm 120 as the wheel 112 is also permitted to turn anti-clockwise under its spring loading 118. Thus the release peg 122 continuously assumes a "home" position which is related to the size of the bale.

When the net 76 tracks over the roll 126 and is drawn into the baling chamber 50 as mentioned above, it will swing the bell-crank lever 106 clockwise a short distance against its light spring loading until the rubber facing 114 of the wheel 112 contacts the shaft 89 which is turning with the feed roll 84. Thus the wheel 112 is driven clockwise against the spring loading 118 and the peg 122 moves under the lever 98, raises it, and thereby releases it from the abutment pin 100, whereupon the hammer 92 thrusts the net 76 against the associated knife 93 and the net is severed. At the same time the hammer 92 triggers cut-off of the feed roll motor. The pull on the bell-crank lever 106 by the net 76 ceases and the wheel 112 moves out of contact with the shaft 89 as the lever 106 swings back into contact with the abutment 111.

After severence of the net 76 the bale continues to turn and the remainder of the cut net is drawn into the chamber 50 to wrap round the bale to complete the double wrap. The belts 42 are stopped, the gate 34 raised by the cylinder units 68, and the wrapped bale is deposited on the ground. The gate 34 is closed and baling can start once more.

Clearly the distance travelled by the peg 122 from its "home" position of contact with the abutment arm 120 to its position at which it releases the hammer 92 determines the length of the net 76 which is cut by the knife 93. Since this distance depends on the position of the idler arm 58 (i.e. on the size of bale) as determined by the sensor 130, the amount of net used in wrapping a bale can be controlled precisely to avoid unnecessary wastage so that the desired appropriate amount of net is employed for each bale automatically regardless of the size of the completed bale in this variable volume baling chamber machine. If any readjustment is needed from time to time, this can be done by shortening or lengthening the cable 128 at its connection with the sensor 130.

## Claims

1. A baling machine for forming cylindrical bales of crop having a baling chamber (50), which is defined by conveying means (42), feed rolls (84, 86) for advancing wrapping material (76) for the completed bale, and a cutting mechanism (90) for the wrapping material (76) downstream of the feed rolls (84, 86), characterised in that the conveyor means are belts (42), the baling chamber (50) is of variable volume, and the machine has a belt take-up and tensioning mechanism (55) including a pair of idler arms (58) and a roll (40) mounted therebetween over which the belts (42) are trained, the arms (58) being swingable to let out an increasing belt length for the chamber (50) as the bale grows in size, the cutting mechanism (90) being arranged automatically to be triggered in dependence on the position of the idler arms (58) corresponding to the size of a completed bale.

2. A baling machine according to claim 1 characterised in that the belt take-up and tensioning mechanism (55) includes a piston and cylinder unit (68) connected to an idler arm (58) to control its swinging movement, the cutting mechanism (90) being arranged to be triggered in dependence on the expansion of the unit (68).

3. A baling machine according to claim 1 or 2 characterised in that the machine has a mechanical link between the belt take-up and tensioning mechanism (55) and the cutting mechanism (90).

4. A baling machine according to claim 3 characterised in that the mechanical link comprises a draw line (128) movable by the belt take-up and tensioning mechanism (55), a spring loaded abutment arm (120) movable by the draw line (128), and a travelling member (122) movable from a position in which it is in contact with the abutment arm (120) to a position in which it triggers the cutting mechanism (90), the distance of travel of the member (122) determining the said length of wrapping material (76).

5. A baling machine according to claim 4 characterised in that the mechanical link includes a wheel (112) arranged to be drivable by a feed roll (84) and the travelling member comprises an abutment (122) on the wheel (112).

6. A baling machine according to claim 5 characterised in that the said drivable wheel (112) is drivable by contact with a support shaft (89) of the feed roll (84).

7. A baling machine according to claim 5 or 6 characterised in that the mechanical link includes a bell-crank lever (106), on one arm (124) of which a wrapping material roll (126) over which the material (76) downstream of the cutting mechanism (90) can be trained is mounted and on the other arm (110) of which the said drivable wheel (112) is mounted, the bell-crank lever (106) being arranged so that it can be swung by the wrapping material (76) when trained over the wrapping material roll (126) to bring the wheel (112) into driving connection with the said feed roll (84).

8. A baling machine according to claim 2 and any of claims 4 to 7 characterised in that the mechanical link includes a sensor (130) which has one portion (138) connected to the draw line (128) and another (136) maintained in contact with the piston and cylinder unit (68) by the pull of the line (128) so as to move therewith on expansion of the unit (68), the sensor (130) being pivotally mounted between the portions (138, 136).

9. A baling machine according to claim 8 characterised in that the said other portion (136) is forked to receive the piston rod (69) of the unit (68) and is maintained in contact with the associated end of the cylinder, the piston and cylinder unit (68) being connected by its cylinder to the idler arm (58) and by its rod (69) to a pivot (70) on a gate (34) of the machine for the completed bale.

10. A baling machine according to any preceding claim characterised in that the cutting mechanism (90) comprises a spring loaded hammer (92), a release lever (98) for the hammer (92) and a knife (93) against which the wrapping material (76) can be forced by the hammer (92) on release by the release lever (98).

**Patentansprüche**

1. Ballenformmaschine zum Bilden von zylindrischen Ballen aus Erntegut mit einer Ballenformkammer (50), die durch Fördermittel (42), Zuführungsrollen (84, 86) zum Vorwärtsbewegen von Hüllmaterial (76) für den fertiggestellten Ballen und durch einen Schneidmechanismus (90) für das Hüllmaterial (76) stromabwärts der Zuführungsrollen (84, 86) bestimmt ist, dadurch gekennzeichnet, daß die Fördermittel Riemen (42) sind, die Ballenformkammer (50) von veränderlichem Volumen ist und die Maschine einen Riemenaufnahme- und Spannmechanismus (55) einschließlich zweier Spannrollenarme (58) und einer zwischen diesen montierten Spannrolle (40) aufweist, über die die Riemen geführt sind, wobei die Arme (58) verschwenkbar sind, um eine zunehmende Riemenlänge für die Kammer (50) auszulassen, wenn der Ballen an Größe zunimmt, und wobei der Schneidmechanismus (90) so angeordnet ist, daß er automatisch in Abhängigkeit von der Stellung der Spannrollenarme (58), die zu der Größe des fertiggestellten Ballens korrespondiert, auslösbar ist.

2. Ballenformmaschine nach Anspruch 1, dadurch gekennzeichnet, daß der Riemenaufnahme- und Spannmechanismus (55) eine Kolben- und Zylinder-Einheit (68) umfaßt, die mit einem Spannrollenarm (58) verbunden ist, um seine Schwenkbewegung zu steuern, wobei der Schneidmechanismus (90) so angeordnet ist, daß er in Abhängigkeit von der Ausdehnung der Einheit (68) ausgelöst wird.

3. Ballenformmaschine nach Anspruch 1 oder 2, dadurch gekennzeichnet, daß die Maschine ein mechanisches Glied zwischen dem Riemenaufnahme- und Spannmechanismus (55) und dem Schneidmechanismus (90) aufweist.

4. Ballenformmaschine nach Anspruch 3, dadurch gekennzeichnet, daß das mechanische Glied einen durch den Riemenaufnahme- und Spannmechanismus (55) bewegbaren Zugstrang (128), einen durch den Zugstrang (128) bewegbaren, federbelasteten Anschlagarm (120) und ein Wanderglied (122) umfaßt, welches aus einer Stellung, in der es mit dem Anschlagarm (120) in Kontakt steht, in eine Stellung bewegbar ist, in der es den Schneidmechanismus (90) auslöst, wobei die Distanz, über die das Glied (122) wandert, die genannte Länge des Hüllmaterials (76) bestimmt.

5. Ballenformmaschine nach Anspruch 4, dadurch gekennzeichnet, daß das mechanische Glied ein Rad (112) einschließt, das so angeordnet ist, daß es durch eine Zuführungsrolle (84) antreibbar ist, und daß das Wanderglied einen Anschlag (122) auf dem Rad (112) umfaßt.

6. Ballenformmaschine nach Anspruch 5, dadurch gekennzeichnet, daß des genannte antreibbare Rad (112) durch Kontakt mit einer Tragwelle (89) der Zuführungsrolle (84) antreibbar ist.

7. Ballenformmaschine nach Anspruch 5 oder 6, dadurch gekennzeichnet, daß das mechanische Glied einen Winkelhebel (106) einschließt, an dessen einem Arm (124) eine Hüllmaterialrolle (126) montiert ist, über die das Material (76) stromabwärts des Schneidmechanismus (90) gezogen werden kann, und auf dessen anderem Arm (110) das genannte antreibbare Rad (112) montiert ist, wobei der Winkelhebel (106) so angeordnet ist, daß er durch das Hüllmaterial (76) verschwenkt werden kann, wenn dieses über die Hüllmaterialrolle (126) gezogen wird, um das Rad (112) in Antriebsverbindung mit der genannten Zuführungsrolle (84) zu bringen.

8. Ballenformmaschine nach Anspruch 2 und irgendeinem der Ansprüche 4 bis 7, dadurch gekennzeichnet, daß das mechanische Glied einen Fühler (130) umfaßt, der einen mit dem Zugstrang (128) verbundenen Teil (138) und einen anderen Teil (136) aufweist, der in Kontakt mit der Kolben- und Zylinder-Einheit (68) durch den Zug am Strang (128) gehalten ist, so daß er sich mit diesem bei der Ausdehnung der Einheit (68) mitbewegt, wobei der Fühler (130) zwischen den Teilen (138, 136) schwenkbar montiert ist.

9. Ballenformmaschine nach Anspruch 8, dadurch gekennzeichnet, daß der genannte andere Teil (136) gabelförmig ausgebildet ist, um die Kolbenstange (69) der Einheit (86) aufzunehmen, und in Kontakt mit dem zugeordneten Ende des Zylinders gehalten ist, wobei die Kolben- und Zylinder-Einheit (68) durch ihren Zylinder mit dem Spannrollenarm (58) und durch ihre Stange (69) mit einem Gelenk (70) an einem Tor (34) der Maschine für den fertiggestellten Ballen verbunden ist.

10. Ballenformmaschine nach irgendeinem der voranstehenden Ansprüche, dadurch gekennzeichnet, daß der Schneidmechanismus (90) einen unter Federspannung stehenden Hammer (92), einen Auslösehebel (98) für den Hammer (92) und ein Messer (93) umfaßt, gegen das das Hüllmaterial (76) durch den Hammer (92) bei Auslösung durch den Auslösehebel (98) gedrängt werden kann.

**Revendications**

1. Machine de mise en balles pour former des balles cylindriques d'une récolte, comprenant une chambre (50) de formation de la balle, qui est définie par des moyens d'entraînement (42), des rouleaux débiteurs (84,86) servant à faire avancer un matériau d'enveloppement (76) pour la balle terminée, et un mécanisme de coupe (90) pour le matériau d'enveloppement (76) en aval des rouleaux débiteurs (84,86), caractérisée en ce que les moyens d'entraînement sont des courroies (42), la chambre (50) de formation de la balle possède un volume variable et la machine possède un mécanisme (55) de rattrapage de jeu et de mise en tension des courroies, comprenant un couple de bras de tension (58) et un rouleau (40) monté entre ces bras et sur lequel les courroies (42) circulent, les bras (58) pouvant osciller de manière à dégager une longueur croissante des courroies pour la chambre (50) lorsque les dimensions de la balle augmentent, le mécanisme de coupe (90) étant agencé de manière à être déclenché automatiquement en fonction de la position des bras de tension (58) correspondant à la taille d'une balle terminée.

2. Machine de mise en balles selon la revendication 1, caractérisée en ce que le mécanisme (55) de rattrapage de jeu et de mise en tension des courroies comprend une unité à piston et cylindre (68) raccordée à un bras de tension (58) pour commander son mouvement d'oscillation, le mécanisme de coupe (90) étant agencé de manière à être déclenché en fonction du déploiement de l'unité (68).

3. Machine de mise en balles selon la revendication 1 ou 2, caractérisée en ce que la machine possède une liaison mécanique disposée entre le mécanisme (55) de rattrapage de jeu et de mise en tension des courroies et le mécanisme de coupe (90).

4. Machine de mise en balles selon la revendication 3, caractérisée en ce que la liaison mécanique comprend un câble de traction (128), agité par le mécanisme (55) de rattrapage de jeu et de mise en tension des courroies, un bras de butée (120) chargé par un ressort et agité par le câble de traction et un élément mobile (122) déplaçable dans une position, dans laquelle il est en contact avec le bras de butée (120), jusque dans une position dans laquelle il déclenche le mécanisme de coupe (90), la course de déplacement de l'élément (122) déterminant ladite longueur du matériau d'enveloppement (76).

5. Machine de mise en balles suivant la revendication 4, caractérisée en ce que la liaison mécanique comprend une roue (112) agencée de manière à pouvoir être entraînée par un rouleau débiteur (84) et que l'élément mobile comprend une butée (122) située sur la roue (112).

6. Machine de mise en balles selon la revendication 5, caractérisée en ce que la roue (112) apte à être entraînée peut être entraînée par suite de son contact avec un arbre de support (89) du rouleau débiteur (84).

7. Machine de mise en balles selon la revendication 5 ou 6, caractérisée en ce que la liaison mécanique comprend un levier coudé (106), sur un bras (124) duquel est monté un rouleau du matériau d'enveloppement (126), sur lequel le matériau (76) en aval du mécanisme de coupe (90) peut être entraîné, et sur l'autre bras (110) duquel est montée ladite roue (112) apte à être entraînée, le levier coudé (106) étant agencé de sorte que le matériau d'enroulement (76) peut le faire pivoter, lorsque ce matériau circule sur le rouleau (126) du matériau d'enveloppement pour ramener la roue (112) à être reliée, selon une liaison d'entraînement, audit rouleau débiteur (84).

8. Machine de mise en balles selon la revendication 2 et l'une quelconque des revendications 4 à 7, caractérisée en ce que la liaison mécanique comprend un capteur (130), dont une partie (138) est raccordée au câble de traction (128) et dont l'autre partie (136) est maintenue en contact avec l'unité à piston et cylindre (68) sous l'effet de la traction du câble (128) de manière à se déplacer avec ce dernier lors du déploiement de l'unité (68), le capteur (130) étant monté pivotant entre les parties (138,136).

9. Machine de mise en balles selon la revendication 8, caractérisée en ce que ladite autre partie (136) est agencée sous la forme d'une fourche de manière à recevoir la tige de piston (69) de l'unité (68) et est maintenue en contact avec l'extrémité associée du cylindre, l'unité à piston et cylindre (68) étant raccordée par son cylindre au bras de tension (58) et par sa tige (69) à un pivot (70) situé sur une porte (34) de la machine, prévue pour le passage de la balle terminée.

10. Machine de mise en balles selon l'une quelconque des revendications précédentes, caractérisée en ce que le mécanisme de coupe (90) comprend un marteau (92) chargé par un ressort, un levier de libération (98) pour le marteau (92) et un couteau (93), contre lequel le matériau d'enveloppement (76) peut être repoussé à force par le marteau (92) lors de sa libération par le levier de libération (98).

FIG.1

EP 0 235 650 B1

FIG.2

FIG.4

EP 0 235 650 B1

FIG.3